# EUROPEAN PATENT APPLICATION

(11) **EP 4 621 214 A1**
(43) Date of publication of application: **24.09.2025**
(21) Application number: 23891185.3
(22) Date of filing: 28.09.2023
(51) Int. Cl.: F03D 1/06, G01H 3/04, F03D 17/00

(54) **STATE DETECTION DEVICE AND STATE DETECTION SYSTEM**

(30) Priority: 18.11.2022 JP 2022185127
(71) Applicant: Yokogawa Electric Corporation, Tokyo 180-8750 (JP)
(72) Inventor: NAKATSU, Yuri, Musashino-shi, Tokyo 180-8750 (JP); KONADA, Soichiro, Musashino-shi, Tokyo 180-8750 (JP); ANNEN, Masato, Musashino-shi, Tokyo 180-8750 (JP)
(74) Representative: Zimmermann, Tankred Klaus
(86) International application number: PCT/JP2023/035475
(87) International publication number: WO 2024/106027

(57) **Abstract**

A state detection apparatus (10) includes an analyzer (12) that detects a state of a detection target. The analyzer (12) acquires acoustic information corresponding to sound generated at the detection target, detects the state of the detection target based on a pattern included in an image representing the time variation of a frequency component of the acoustic information, and outputs a result of detecting the state of the detection target.

## Description

### CROSS-REFERENCE TO RELATED APPLICATION

The present application claims priority to Japanese Patent Application No. 2022-185127 filed on November 18, 2022, the entire contents of which are incorporated herein by reference.

### TECHNICAL FIELD

The present disclosure relates to a state detection apparatus and a state detection system.

### BACKGROUND

Conventionally, in determining whether a blade of a wind turbine is abnormal, a method for detecting the presence of a Doppler shift component, in which a frequency component with high sharpness changes over time, in the analysis results of acoustic information (wind noise) emitted by the blade is known (see, for example, Patent Literature (PTL) 1).

### CITATION LIST

### Patent Literature

PTL 1: JP 2010-281279 A

### SUMMARY

### (Technical Problem)

When diagnosing equipment such as a wind power generation apparatus, or blades and other components thereof, various states such as an abnormality of the diagnosis target need to be detected.

It is an aim of the present disclosure, conceived in light of these points, to provide a state detection apparatus and a state detection system that can improve the detection accuracy of various states, such as an abnormality of a diagnostic target, when diagnosing equipment such as a wind power generation apparatus or blades and other components thereof.

### (Solution to Problem)

A state detection apparatus according to several embodiments includes an analyzer configured to detect a state (such as an abnormality) of a detection target (such as a blade of a wind power generation apparatus). The analyzer acquires, as acoustic information, a result of measuring sound generated at the detection target, detects a state of the detection target based on a pattern included in an image representing a time variation of a frequency component of the acoustic information, and outputs a result of detecting the state of the detection target. By detecting the state of the detection target as described above, the state detection apparatus can improve the detection accuracy of various states such as an abnormality of the diagnosis target when diagnosing equipment such as a wind power generation apparatus, or blades and other components thereof.

In the state detection apparatus according to an embodiment, the analyzer may be configured to analyze a site of the detection target at which a sound represented by the pattern is generated. This configuration facilitates inspections, repairs, and the like of the analyzed site. Consequently, the safety of the detection target is improved.

In the state detection apparatus according to an embodiment, the analyzer may be configured to output that a state of the site at which the sound represented by the pattern is generated is abnormal in a case in which a numerical value representing a difference between the pattern and a normal pattern is equal to or greater than a difference threshold. In this way, the criteria for determining the state of the detection target become clear. The accuracy of state detection improves as a result. The threshold may be set not only to a fixed value, but also to a value using factors such as the operating state or wind conditions. This also improves the detection accuracy of the state.

In the state detection apparatus according to an embodiment, the analyzer may detect the state of the detection target based on a database that associates the pattern with the state of the detection target. The analyzer may generate the normal pattern based on acoustic information for which the state of the detection target is normal and register the normal pattern in the database. This improves the accuracy of pattern classification. The accuracy of detection of the state of the detection target improves as a result.

A state detection system according to several embodiments includes the aforementioned state detection apparatus and a sound collection apparatus configured to measure sound generated at a detection target and output a result of measurement to the state detection apparatus as acoustic information. By including the aforementioned state detection apparatus, the state detection system can improve the detection accuracy of various states such as an abnormality of the diagnosis target when diagnosing equipment such as a wind power generation apparatus, or blades and other components thereof.

In the state detection system according to an embodiment, the sound collection apparatus may include a plurality of microphones. The sound collection apparatus may be configured to generate acoustic information representing a component of sound arriving at the sound collection apparatus from a predetermined direction based on sound detected by each of the microphones. The influence of sounds generated outside the detection target, such as background sounds, can thus be reduced. The accuracy of detection of the state of the detection target improves as a result.

In the state detection system according to an embodiment, the analyzer of the state detection apparatus may be configured to acquire a plurality of pieces of acoustic information representing a component of sound arriving at the sound collection apparatus from each direction in a plurality of directions. The analyzer may be configured to detect the state of the detection target based on the plurality of pieces of acoustic information. By detection of the state of the detection target based on the plurality of pieces of acoustic information, the influence of sounds generated outside the detection target, such as background sounds, can be reduced. The accuracy of detection of the state of the detection target improves as a result.

### (Advantageous Effect)

According to the present disclosure, a state detection apparatus and a state detection system that can improve the detection accuracy of various states, such as an abnormality of a diagnostic target, when diagnosing equipment such as a wind power generation apparatus or blades and other components thereof can be provided.

### BRIEF DESCRIPTION OF THE DRAWINGS

In the accompanying drawings:
FIG. 1 is a diagram illustrating an example of analysis of acoustic information according to a comparative example;
FIG. 2 is a schematic diagram illustrating a configuration example of a state detection system according to an embodiment;
FIG. 3 is a block diagram illustrating an example configuration of a state detection system according to an embodiment;
FIG. 4 is a diagram illustrating an example, as a grayscale image, of the time variation of frequency components of sound;
FIG. 5 is a diagram illustrating an example, as a grayscale image, of the time variation of frequency components of acoustic information corresponding to a component of sound arriving from a first direction;
FIG. 6 is a diagram illustrating an example, as a grayscale image, of the time variation of frequency components of acoustic information corresponding to a component of sound arriving from a second direction;
FIG. 7 is a diagram illustrating an example of a periodic pattern included in a grayscale image;
FIG. 8 is a diagram illustrating an example of a granular pattern included in a grayscale image;
FIG. 9 is a diagram illustrating an example of a linear pattern included in a grayscale image; and
FIG. 10 is a flowchart illustrating an example of the procedures of a state detection method according to an embodiment.

### DETAILED DESCRIPTION

### (Comparative Example)

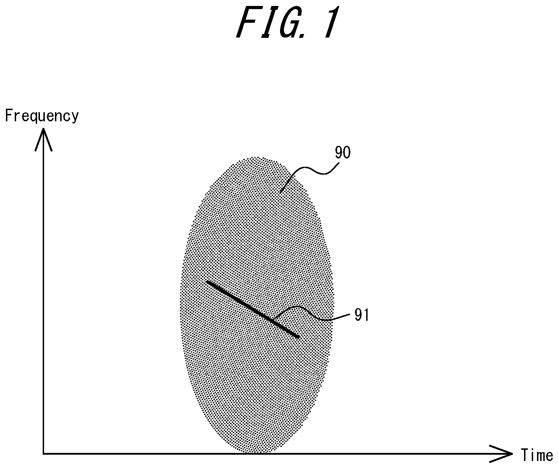

A system according to a comparative example uses a microphone installed at a fixed position to detect wind noise generated by the rotating blades of a wind turbine. As illustrated as a graph in FIG. 1, the sound is represented as a change in frequency components over time. The horizontal axis of the graph in FIG. 1 represents time. The vertical axis represents frequency. The frequency components of the sound from the blades of the wind turbine are represented as a region 90. In a case in which the blade has a characteristic site such as a scratch, the sound generated at the characteristic site is distinguished as a prominent region 91 in the region 90.

Here, the rotating blade of the wind turbine has a velocity relative to the fixed microphone. In a case in which the source of sound moves with the blade, the sound generated by the abnormal irregularity of the blade changing the air flow is detected by the microphone along with the sound of the blades. The system according to the comparative example determines whether the blade is abnormal by detecting the presence, in the acoustic signal, of a frequency component that has a high sharpness and changes over time (Doppler shift). The system according to the comparative example determines that the blade is abnormal in a case in which the change over time of the highly sharp frequency component has a predetermined slope.

However, the system according to the comparative example can only detect states that appear as changes over time or slope of a highly sharp frequency component in the acoustic signal.

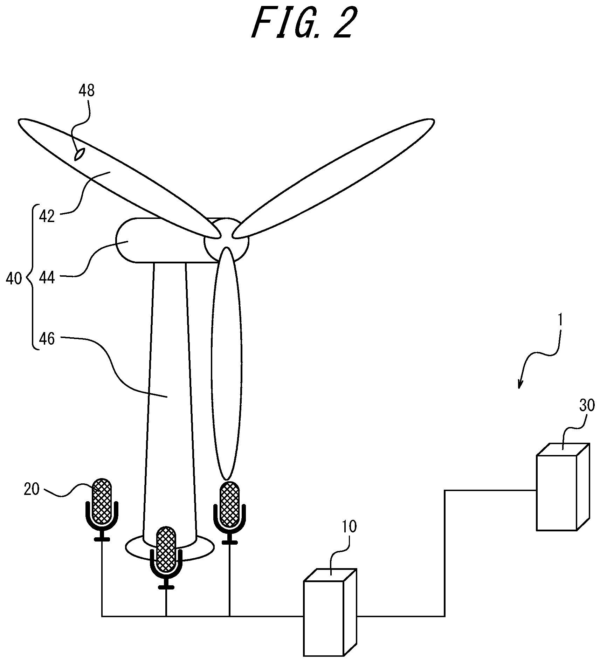

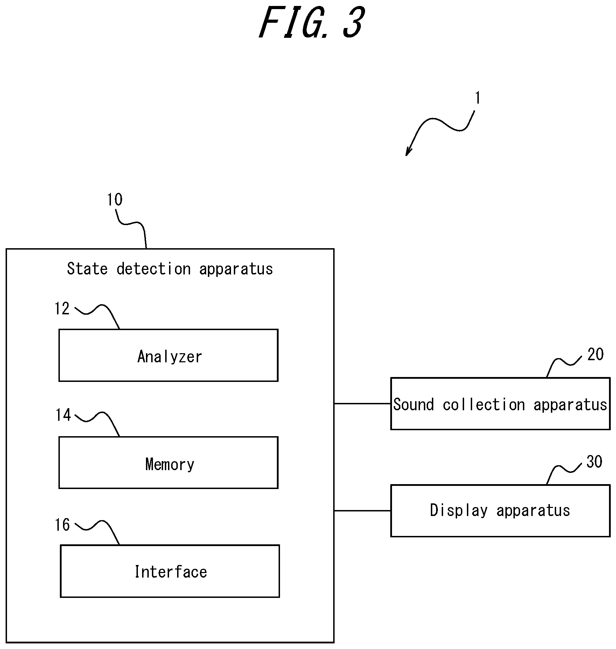

The present disclosure therefore describes a state detection system 1 (see FIGS. 2 and 3) that can detect various states of a detection target without needing to detect the change over time or slope of a highly sharp frequency component in an acoustic signal based on sound generated at a detection target such as the blades 42 of a wind turbine 40 (see FIG. 2).

### (Embodiment of Present Disclosure)

As illustrated in FIGS. 2 and 3, a state detection system 1 according to an embodiment includes a state detection apparatus 10, a sound collection apparatus 20, and a display apparatus 30. The state detection system 1 detects the state of a detection target based on sound generated at the detection target. In the present embodiment, the detection target is the blades 42 of the wind turbine 40 illustrated in FIG. 2. In addition to the blades 42, the wind turbine 40 includes a nacelle 44 and a support 46. In the present embodiment, it is assumed that an anomaly has occurred in a blade 42. The abnormality occurring in the blade 42 may include various forms such as scratches, cracks, fissures, protrusions, or depressions on the surface of the blade 42, or cavities, cracks, or fissures inside the blade 42. The state detection system 1 may detect an abnormality occurring in the blade 42, with the blade 42 as the detection target. The site in the blade 42 where the abnormality is occurring is also referred to as the abnormal site 48.

### (Configuration Example of State Detection System 1)

An example configuration of the state detection system 1 is described below.

### <State Detection Apparatus 10>

The state detection apparatus 10 detects the state of the blade 42 based on acoustic information corresponding to the waveform of sound generated by the blade 42, which is the detection target. The detection target is not limited to the blade 42 and may include other parts such as the nacelle 44. The state detection apparatus 10 may detect the state of the blade 42 based not on the frequency components of the acoustic information or the time variation of the frequency components of the acoustic information. The state detection apparatus 10 may acquire the acoustic information, the frequency components of the acoustic information, or the time variation of the frequency components of the acoustic information from the sound collection apparatus 20, which is described below. The state detection apparatus 10 may acquire the frequency components of the acoustic information or the time variation of the frequency components of the acoustic information by acquiring the acoustic information from the sound collection apparatus 20 and performing frequency analysis on the acoustic information. The state detection apparatus 10 includes an analyzer 12, a memory 14, and an interface 16.

The analyzer 12 controls each component of the state detection apparatus 10. The analyzer 12 may, for example, be configured by a processor such as a central processing unit (CPU). The analyzer 12 may implement predetermined functions by having the processor execute a predetermined program.

The memory 14 may store various information used for operations of the analyzer 12, programs for implementing the functions of the analyzer 12, and the like. The memory 14 may function as a working memory of the analyzer 12. The memory 14 may, for example, be a semiconductor memory. The memory 14 may be configured to include volatile memory or non-volatile memory. The memory 14 may be configured as a non-transitory computer readable storage medium. The memory 14 may be included in the analyzer 12.

The interface 16 is configured to include a communication device that communicably connects the state detection apparatus 10 with the sound collection apparatus 20 or the display apparatus 30. The communication device may be configured to communicate based on a mobile communication standard, such as 4^{th} Generation (4G), Long Term Evolution (LTE), or 5^{th} Generation (5G). The communication device may be configured to be capable of communication based on a communication standard such as Local Area Network (LAN). The communication device may be configured to be capable of wired or wireless communication.

The interface 16 may be configured to include a display device. The display device may include various types of displays, such as a liquid crystal display. The interface 16 may be configured to include an audio output device, such as a speaker. The interface 16 is not limited to these examples and may be configured to include various other output devices.

The interface 16 may be configured to include an input device that accepts input from the user. The input device may, for example, include a keyboard or physical keys, a touch panel or touch sensor, or a pointing device such as a mouse. The input device is not limited to these examples and may be configured to include a variety of other devices.

The state detection apparatus 10 may be configured as a Personal Computer (PC) or at least one server apparatus. The state detection apparatus 10 may be realized in a cloud computing system.

The state detection apparatus 10 may be configured to allow input of parameters and the like for detecting the state of a detection target, including, for example, the blade 42.

### <Sound Collection Apparatus 20>

The sound collection apparatus 20 includes one or more microphones. The sound collection apparatus 20 uses the one or more microphones to detect sound generated from the detection target or its surrounding environment. In other words, the sound collection apparatus 20 uses the one or more microphones to detect sound generated in the environment in which the detection target exists. The sound collection apparatus 20 outputs the detection results of the sound detected by the one or more microphones to the state detection apparatus 10 as acoustic information. The acoustic information may be expressed as a waveform representing the time variation of sound pressure. The acoustic information may be represented by the amplitude and phase of the sound pressure.

In a case in which the sound collection apparatus 20 includes a plurality of microphones, the plurality of microphones may be configured as array microphones arranged in an array. The sound collection apparatus 20 may output the result of measuring the waveform of sound detected by each of the microphones constituting the array microphones to the state detection apparatus 10 as acoustic information. The state detection apparatus 10 may generate acoustic information corresponding to the waveform of a component of sound arriving from a predetermined direction relative to the sound collection apparatus 20 by analyzing the amplitude and phase of the waveform of the measurement result acquired from each microphone as acoustic information. For example, the state detection apparatus 10 may generate acoustic information corresponding to the waveform of a component of sound arriving from a predetermined portion of the detection target. The direction from the predetermined portion of the detection target to the sound collection apparatus 20 is also referred to as the first direction. The acoustic information representing the component of sound arriving at the sound collection apparatus 20 from the first direction is also referred to as the first acoustic information. For example, the state detection apparatus 10 may generate acoustic information corresponding to the waveform of a component of sound arriving from a predetermined portion other than the detection target. The direction from the predetermined portion other than the detection target to the sound collection apparatus 20 is also referred to as the second direction. The acoustic information representing the component of sound arriving at the sound collection apparatus 20 from the second direction is also referred to as the second acoustic information. The state detection apparatus 10 may generate acoustic information corresponding to the waveform of components of sound arriving from each of the first direction and the second direction. The state detection apparatus 10 may generate acoustic information corresponding to the waveform of components of sound arriving from each direction in a plurality of directions.

The sound collection apparatus 20 may be arranged around the support 46 of the wind turbine 40 as the detection target, as illustrated in FIG. 2. The sound collection apparatus 20 may be arranged near the point where the extension of a line from the axis of rotation of the blade 42 to the tip of the blade 42 (vertical line) intersects the ground when the blade 42 has rotated to its lowest position. The sound collection apparatus 20 is not limited to the position illustrated in FIG. 2 and may be arranged at various other positions, such as the nacelle 44. The sound collection apparatus 20 may be arranged near the point where the vertical line from the tip of the blade 42 intersects the ground when the tip of the blade 42 rotates along the axis of rotation to a horizontal position.

### <Display Apparatus 30>

The display apparatus 30 displays the result of detecting the state of the detection target by the state detection apparatus 10. The display apparatus 30 may display various data, such as the acoustic information, the frequency components of the acoustic information, or the time variation of the frequency components of the acoustic information. The display apparatus 30 may include various types of displays, such as a liquid crystal display. The state detection system 1 may include a speaker that outputs the sound itself measured by the sound collection apparatus 20, or audio such as a warning sound generated in response to the result of detecting the state of the detection target.

### (Example of Operation of State Detection System 1)

In the state detection system 1, the state detection apparatus 10 can detect the state of a detection target based on acoustic information corresponding to the waveform of sound generated in the environment in which the detection target exists. An example configuration of the state detection system 1 is described below.

### <Analysis of Acoustic Information>

The analyzer 12 of the state detection apparatus 10 may quantify the sound pressure at each frequency using a method such as a Fast Fourier Transform (FFT) or 1/1 or 1/3 octave analysis on the acoustic information. The analyzer 12 may quantify the amount of change in sound pressure at each frequency. The analyzer 12 may calculate the frequency at which the sound pressure reaches a local maximum value in a specified fixed time width as the peak frequency. By tracking the peak frequency, the analyzer 12 may calculate the duration of the peak, the amount of movement of the peak frequency, the magnitude of the sound pressure at the peak frequency, and the degree of dispersion of the sound pressure in the frequency band including the peak frequency. The analyzer 12 may store the results of the analysis of the acoustic information in the memory 14 together with the acoustic information.

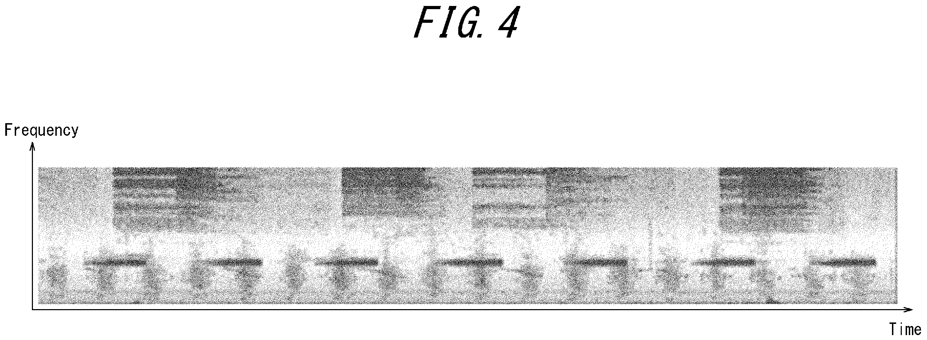

The analyzer 12 may detect the state of the detection target based on the time variation of the frequency components of the acoustic information. The time variation of the frequency components of the acoustic information may be represented as an image containing pixels that represent, in grayscale, the magnitude of a certain frequency component of the acoustic information at a certain time, as illustrated in FIG. 4. The vertical direction in which the pixels are aligned in the image is also referred to as a column. That is, an image contains a plurality of columns of pixels. The horizontal direction in which pixels are aligned in an image is also referred to as a row. That is, an image contains a plurality of rows of pixels. Each column of pixels in the image illustrated in FIG. 4 represents the magnitude of each frequency component of the acoustic information at the same time. Each row of pixels in the image illustrated in FIG. 4 represents the magnitude of the same frequency component of the acoustic information at each time. In the image in FIG. 4, the closer the color of a point representing a frequency component at a given time is to black, the greater the sound pressure of that frequency component at that time. In other words, a point whose color is close to black has a dark color. Conversely, the closer the color of a point representing a frequency component at a given time is to white, the smaller the sound pressure of that frequency component at that time. In other words, a point whose color is close to white has a light color. The image in FIG. 4 is thus a substantially three-dimensional graph of the relationship among time, frequency of acoustic information, and the magnitude of each frequency component at each time.

The grayscale image illustrated in FIG. 4 represents the time variation of the frequency components of the combined acoustic information of sound arriving from various directions toward the sound collection apparatus 20 in the environment in which the blade 42 as the detection target exists. In other words, the grayscale image illustrated in FIG. 4 represents the time variation of the frequency components of the acoustic information detected by the sound collection apparatus 20 without directionality. The time variation of the frequency components of the acoustic information is not limited to a grayscale image but may be represented by an RGB image or in various other forms.

By detecting sound with a microphone array as described above, the sound collection apparatus 20 can generate acoustic information corresponding to the waveform of a component of sound arriving from a specific direction. In other words, the sound collection apparatus 20 can generate acoustic information by detecting sound having directionality.

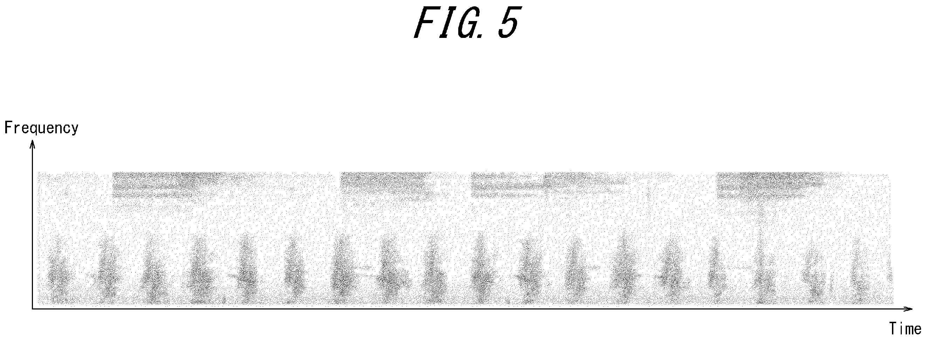

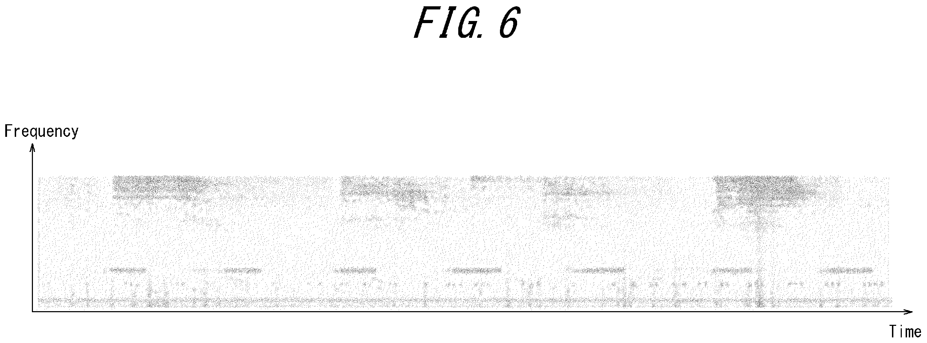

The grayscale image illustrated in FIG. 5 represents the time variation of the frequency components of the acoustic information corresponding to the waveform of the components of sound arriving at the sound collection apparatus 20 from the first direction. The grayscale image illustrated in FIG. 6 represents the time variation of the frequency components of the acoustic information corresponding to the waveform of the components of sound arriving at the sound collection apparatus 20 from the second direction. In the grayscale images illustrated in FIGS. 5 and 6, the pixels in each column, i.e., the pixels aligned vertically, represent the magnitude of each frequency component of the acoustic information at the same time. The pixels of each row in the image illustrated in FIG. 4, i.e., the pixels aligned horizontally, represent the magnitude of the same frequency component of the acoustic information at each time.

### <Filtering>

The analyzer 12 may perform filtering on the acoustic information. The analyzer 12 may perform frequency filtering on high frequencies, low frequencies, or a combination of high and low frequencies. The analyzer 12 may perform filtering to remove sudden increases in sound pressure over a short period of time. A sudden increase in sound pressure over a short period of time is also referred to as a spike. The analyzer 12 may perform digital filtering using a first-order delay, moving average, or the like. The analyzer 12 may perform background sound filtering using recorded or defined sound pressure data for background sound. The analyzer 12 may perform filtering prior to analysis of the acoustic information as described above.

### <Detection of Characteristic Patterns>

The image representing the time variation of the frequency components of the acoustic information includes characteristic patterns. The analyzer 12 may recognize the acoustic information synchronized with the passage of the blade 42 as the acoustic information for the blade 42. Here, in the image representing the time variation of the frequency component of the acoustic information, the axis extending in the horizontal direction is also referred to as the time axis. The axis extending in the vertical direction is also referred to as the frequency axis. In the acoustic information for the blade 42, a frequency at which the sound pressure varies significantly from the surrounding area, including adjacent or nearby pixels, on the time axis or frequency axis is also referred to as a peak frequency. The analyzer 12 may detect a pattern including the peak frequency as a characteristic pattern. The analyzer 12 may detect a range of points in the image of the acoustic information as a characteristic pattern, the points including the point at the peak frequency and points whose sound pressure is equal to or greater than the sound pressure of the point at the peak frequency multiplied by a predetermined percentage.

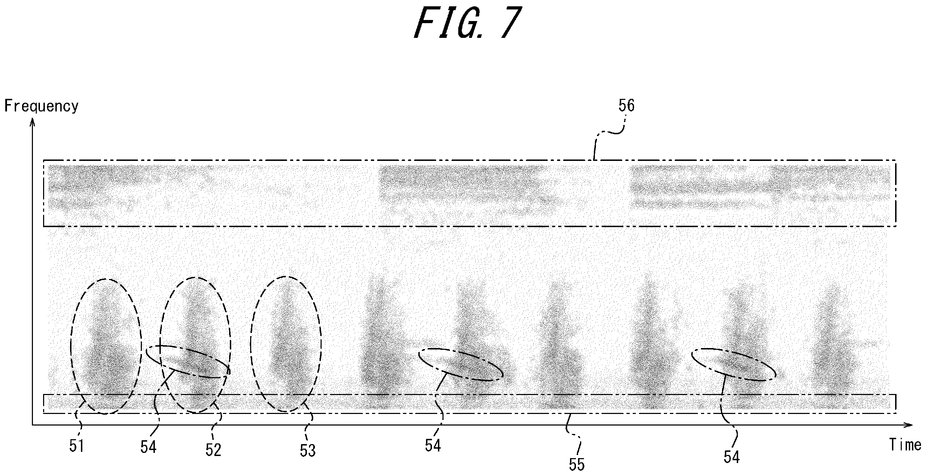

The analyzer 12 may detect patterns 51, 52, and 53 as patterns corresponding to the wind noise of each of the three blades 42 as the detection target, as illustrated in FIG. 7. The analyzer 12 may calculate the number of rotations of the blades 42 based on the time interval for detecting the patterns 51, 52 and 53.

The analyzer 12 may calculate the frequency range in which each of the patterns 51, 52 and 53 appears. The analyzer 12 may determine whether the state of each blade 42 has changed based on changes over time in the frequency range in which each pattern appears.

The analyzer 12 may detect a characteristic pattern 54 within the pattern 52 as a characteristic pattern that is not present in the patterns 51 and 53. By detecting the characteristic pattern 54, the analyzer 12 may detect the possibility that the state of the blade 42 from which the characteristic pattern 54 was detected is abnormal. The analyzer 12 may analyze which site in the blade 42 may be in an abnormal state based on the amount of change in frequency per unit time of the characteristic pattern 54. Analysis of the site that may be in an abnormal state facilitates inspections, repairs, and the like of the site. Consequently, the safety of the detection target is improved.

At the site where a characteristic sound is emitted by the blade 42, the characteristic sound changes according to a change in the size of the foreign matter, scratch, or the like. The analyzer 12 may detect changes in the state of the site emitting the characteristic sound on the blade 42 by monitoring changes in the frequency of the characteristic sound, or by monitoring the magnitude of the sound pressure at the peak frequency or the spread of the characteristic pattern including the peak frequency. The frequency of the characteristic sound, the magnitude of the sound pressure at the peak frequency, or the spread of the characteristic pattern including the peak frequency may change according to changes in the relative velocity of the blade 42 and the wind, or the occurrence of turbulence. In a case in which the same characteristic sound is detected by the sound collection apparatus 20 multiple times in one rotation cycle of the blade 42, the analyzer 12 can reduce the effect of wind changes or turbulence in the characteristic sound by comparing the acoustic information for the characteristic sound detected each time, thereby improving the detection accuracy of changes in the state of the site emitting the characteristic sound.

The analyzer 12 may detect a pattern 55 that exists in a lower frequency region as another pattern. In the case of detecting the pattern 55, the analyzer 12 may determine that the sound of substation equipment present in the vicinity of the detection target, the sound of waves on the coast or at sea, or the like has been detected. The analyzer 12 may detect a pattern 56 that exists in a higher frequency region as another pattern. In the case of detecting the pattern 56, the analyzer 12 may determine that the sound of wind blowing in the vicinity of the detection target, aircraft noise, or the like has been detected.

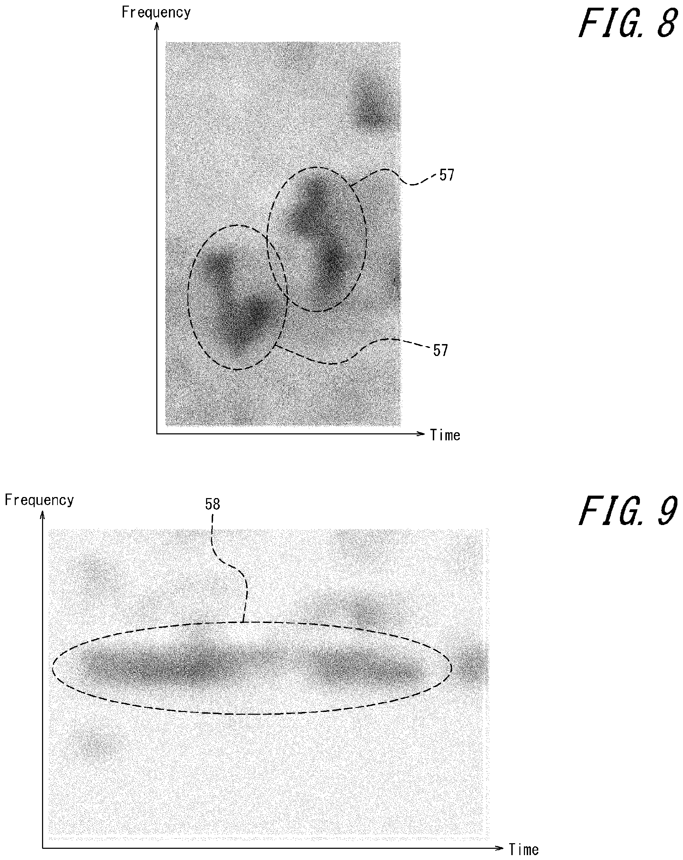

The analyzer 12 may detect a granular characteristic pattern 57, as illustrated in FIG. 8. In the case of detecting the granular characteristic pattern 57 in the pattern corresponding to the blade 42, the analyzer 12 may detect that minute vibrations are occurring in the blade 42. The minute vibrations occurring in the blade 42 are also referred to as chatter. The analyzer 12 may detect a linear characteristic pattern 58, as illustrated in FIG. 9. In the case of detecting the linear characteristic pattern 58 in the pattern corresponding to the blade 42, the analyzer 12 may detect that the surface of the blade 42 is uneven.

The analyzer 12 may detect the state of the blade 42 based not only on shape, such as granular or linear, but also on other criteria. For example, the analyzer 12 may detect the state of the blade 42 based on which frequency band a characteristic pattern appears in within the acoustic information, and for how long. For example, the analyzer 12 may calculate which frequency band a characteristic pattern appears in within the acoustic information, and for how long, as the area of the characteristic pattern in the image of the acoustic information, and detect the state of the blade 42 based on the calculated area of the characteristic pattern. The analyzer 12 may detect the state of the blade 42 based on the magnitude of the frequency components included in the characteristic pattern. The magnitude of the frequency components included in the characteristic pattern corresponds to the intensity of the color of pixels when the magnitude of the sound pressure or the magnitude of a component is expressed in grayscale in the image of the acoustic information.

The analyzer 12 may recognize acoustic information that is not synchronized with the passage of the blade 42 as sound generated in the surrounding environment apart from the blade 42, or as the sound of a bird or other flying object colliding with at least part of the blade 42 as the detection target.

### <Classification of Characteristic Patterns>

The patterns included in the images representing acoustic information are classified into a category representing the state of the detection target and a category not related to the state of the detection target. The category representing the state of the detection target is further classified into a category representing that the state of the detection target is normal and a category representing that the state of the detection target is abnormal. The category representing that the state of the detection target is abnormal is further classified into categories representing the form of the abnormality occurring in the detection target. The category not related to the state of the detection target is further classified into a category representing natural sounds such as wind or waves in the environment where the detection target is located, and a category representing artificial sounds occurring in the vicinity of the detection target. The category representing artificial sounds may be further classified into categories representing various artificial sounds, such as the sound of a car driving, a ship sailing, or an aircraft flying. The categories are not limited to these examples.

The analyzer 12 may set the categories in advance and classify the detected patterns into the set categories. In a case in which the category into which the pattern is classified represents the state of the detection target, the analyzer 12 may detect the state represented by the category as the state of the detection target when the characteristic pattern was detected. For example, in a case in which the characteristic pattern is classified into a category representing a hole on the surface of the blade 42, the analyzer 12 may detect the presence of a hole on the surface of the blade 42 as the state of the detection target. For example, in a case in which the analyzer 12 classifies the characteristic pattern into a category that is not related to the state of the detection target or a category that represents that the state of the detection target is normal, the analyzer 12 may detect the state of the detection target as not being abnormal.

The analyzer 12 may register data associating the categories of the characteristic pattern with the state of the detection target in advance in a database. The analyzer 12 may classify the characteristic patterns into the categories registered in the database. The accuracy of classification of the characteristic patterns is improved by use of the database to classify the characteristic patterns. The analyzer 12 may detect the state associated with the classified category as the state of the detection target. By the state of the detection target being detected after improvement in classification accuracy of the characteristic patterns, the detection accuracy of the state of the detection target is improved. The database may be stored in the memory 14 or in an external storage apparatus connected to the state detection apparatus 10.

The database may be generated for each individual blade 42 of the wind turbine 40. Due to factors such as the repair history of each individual blade 42, errors in components during manufacturing, or errors in assembly, the pattern when each blade 42 is in an abnormal state may differ from blade to blade. The analyzer 12 may measure sound immediately after repair for each blade 42 using the sound collection apparatus 20 to acquire a waveform in order to register information on the repair marks for each blade 42 as a normal pattern in the database. The analyzer 12 may also extract a characteristic pattern from the image of the acoustic information in order to register information on the repair marks for each blade 42 as a normal pattern in the database.

The database may be generated in common for a plurality of blades 42. It is assumed that the above-described individual differences of the blades 42 are not taken into account in a database generated in common for a plurality of blades 42. Under this assumption, the analyzer 12 might determine the state of blade 42 to be abnormal even when a characteristic pattern in the images representing the acoustic information of each blade 42 corresponds to the normal state of the blade 42. Conversely, the analyzer 12 might determine the state of blade 42 to be normal even when a characteristic pattern corresponds to an abnormal state of the blade 42. In other words, the rate at which the state corresponding to the characteristic pattern can be correctly recognized might be reduced because of individual differences of the blades 42 not being taken into account in the determination. The rate of correct recognition of the state corresponding to the characteristic pattern is also referred to as the recognition rate. To be able to maintain the recognition rate, the analyzer 12 may consider blades 42 that have the same or similar patterns corresponding to a normal or abnormal state as one group when the wind turbine 40 starts operating for the first time or when operation is resumed after a blade 42 is repaired. The analyzer 12 may generate a common database of characteristic patterns common to the blades 42 in that group as standard patterns and determine the state of the blades 42 while considering the individual differences of the blades 42.

The analyzer 12 may generate a learned model for classifying the characteristic patterns by performing machine learning using teacher data that represents the categories into which characteristic patterns are to be classified. The analyzer 12 may acquire the learned model for classifying the characteristic patterns from an external apparatus. The analyzer 12 may classify the characteristic patterns using the learned model.

The normal state of the blade 42 as a detection target includes a variety of states. For example, the normal state may include a state when the blade 42 is repaired or replaced. The analyzer 12 may acquire acoustic information that measures the sound produced by the blade 42 when the blade 42 as the detection target is in a normal state. The analyzer 12 may register various patterns included in the acoustic information when the blade 42 is in a normal state in a database in association with the normal state or abnormal state. The patterns included in the acoustic information when the blade 42 as a detection target is in a normal state are also referred to as normal patterns. The analyzer 12 may register the normal patterns in the database in association with the normal state of the blade 42. The analyzer 12 may update the database by adding new normal patterns, while leaving the previously registered normal patterns in the database. The analyzer 12 may update the database by replacing the previously registered normal patterns in the database with the new normal patterns. The analyzer 12 may register a pattern included in the acoustic information when the blade 42 is known to be in a normal state, even if the state of the blade 42 has changed, as a new normal pattern in the database. In this way, patterns corresponding to sounds caused by repair marks, for example, will not be mistakenly detected as abnormal. The accuracy of detection of the state of the detection target improves as a result.

The analyzer 12 may extract a pattern having a difference with respect to a normal pattern from the patterns included in the acoustic information for the blade 42. In a case in which the analyzer 12 is able to extract a pattern having a difference with respect to the normal pattern, the analyzer 12 may detect that the state of the blade 42 is not a normal state. The state of the blade 42 not being a normal state may, for example, include a scratch on the surface of the blade 42.

To determine whether the pattern extracted from the acoustic information for the blade 42 corresponds to a normal pattern, the analyzer 12 may calculate a numerical value representing the difference between the extracted pattern and the normal pattern. The analyzer 12 may detect that the state of the site where the sound represented by the characteristic pattern was generated is normal in a case in which the numerical value representing the difference is less than a difference threshold. The analyzer 12 may detect that the state of the site where the sound represented by the characteristic pattern was generated is abnormal in a case in which the numerical value representing the difference is equal to or greater than a difference threshold. In this way, the criteria for determining the state of the detection target become clear. The accuracy of state detection improves as a result.

The analyzer 12 may determine whether the state of the blade 42 is a normal state without calculating the difference between the patterns included in the acoustic information for the blade 42 and the normal patterns. For example, the analyzer 12 may register the patterns included in the acoustic information when the blade 42 as a detection target is not in a normal state, or the patterns included in the acoustic information when the blade 42 is in an abnormal state, in the database as abnormal patterns. The analyzer 12 may determine that the state of the blade 42 is not a normal state, or that the state of the blade 42 is an abnormal state, in a case in which a pattern included in the acoustic information for the blade 42 matches an abnormal pattern.

Artificial sounds can be caused by a variety of sources. The analyzer 12 may register characteristic patterns of sounds, such as operation sounds known to occur under normal conditions, as normal patterns in the database. In the case of detecting a characteristic pattern that does not correspond to a normal pattern, the analyzer 12 may, for example, detect a lightning strike in the vicinity of the detection target. In the case of detecting a characteristic pattern that does not correspond to a normal pattern, the analyzer 12 may determine that a bird or other flying object has collided with a blade 42. In the case of detecting a characteristic pattern that does not correspond to a normal pattern, the analyzer 12 may determine that an abnormal event, such as intrusion of a suspicious person, has occurred in the vicinity of the wind turbine 40 equipped with the blades 42 as the detection target.

The learned model may be generated so that the characteristic patterns corresponding to the various states when the blade 42 as a detection target is in a normal state are classified into categories representing normal states.

The analyzer 12 may detect the state of the detection target based on the first acoustic information representing the component of sound arriving at the sound collection apparatus 20 from the first direction and the second acoustic information representing the component of sound arriving at the sound collection apparatus 20 from the second direction. For example, the analyzer 12 may extract a noise component from the second acoustic information and detect the state of the detection target based on information resulting from removal of the extracted noise component from the first acoustic information. By the state of the detection target being detected based on acoustic information from which the noise component has been removed, the detection accuracy of the state of the detection target improves. The analyzer 12 may detect characteristic patterns based only on the first acoustic information representing a sound component arriving from the detection target. The influence of sounds generated outside the detection target, such as background sounds, can thus be reduced. The accuracy of detection of the state of the detection target improves as a result.

The analyzer 12 may use a bandpass filter to remove or attenuate acoustic information in a predetermined frequency band. The analyzer 12 may, for example, use a bandpass filter to remove or attenuate the acoustic information in a frequency band other than the frequency of the sound of the blade 42. In this way, the detection accuracy of the state of the blade 42 based on the acoustic information for the blade 42 is improved.

The analyzer 12 may perform filtering that uses a reference on the time variation data of the frequency components of the acoustic information. Specifically, the analyzer 12 may calculate a difference spectrum, which the frequency spectrum at a certain time minus the frequency spectrum from a predetermined time in the past. The frequency spectrum of the background sound is removed or reduced in the difference spectrum. As a result, the detection accuracy of abrupt sounds included in the background sound is improved.

### <Tracking>

The analyzer 12 may monitor the peak frequency as it changes over time and capture the peak frequency as a series of events. From the series of events, the analyzer 12 may calculate the threshold of sound pressure to be detected as a characteristic pattern including the peak frequency, the peak frequency at the beginning or end of the series of events, the duration of the series of events, or the degree of spread of the characteristic pattern. The degree of spread refers to the width of the frequencies that are equal to or greater than the sound pressure threshold.

### <Notification of State>

The analyzer 12 may output the state represented by the category of the characteristic pattern to the display apparatus 30 as the detection result of the state detection apparatus 10. By displaying the detection result of the state detection apparatus 10, the display apparatus 30 may notify the entity managing the wind turbine 40 equipped with the blades 42 as the detection target. The analyzer 12 is not limited to outputting to the display apparatus 30 and may output the detection result of the state detection apparatus 10 to various other apparatuses, such as a speaker or a light. The speaker may output sound to notify the entity managing the wind turbine 40 equipped with the blades 42 of the state of the blades 42 as the detection target. The light may emit light or change the light emission state to notify the entity managing the wind turbine 40 equipped with the blades 42 of the state of the blades 42 as the detection target.

### <Example Procedures for State Detection Method>

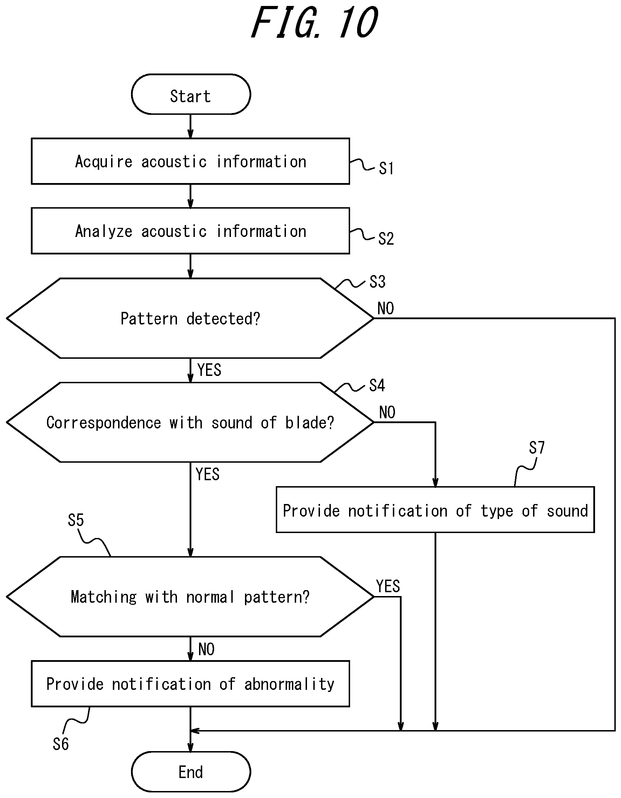

The analyzer 12 of the state detection apparatus 10 may execute a state detection method including the procedures in the flowchart illustrated in FIG. 10. The state detection method may be implemented as a state detection program executed by the processor that configures the analyzer 12. The state detection program may be stored on a non-transitory computer readable medium.

The analyzer 12 acquires the acoustic information of the blade 42 as the detection target (step S1). The analyzer 12 analyzes an image representing the frequency components or the time variation of the frequency components of the acoustic information (step S2). The analyzer 12 determines whether a pattern is detected in the image of the acoustic information (step S3). In a case in which a pattern is not detected in the image of the acoustic information (step S3: NO), the analyzer 12 terminates execution of the procedures of the flowchart in FIG. 10.

In a case in which a pattern is detected in the image of the acoustic information (step S3: YES), the analyzer 12 determines whether the detected pattern is a pattern corresponding to the sound of the blade 42 (step S4). In other words, the analyzer 12 determines whether the detected pattern is classified into a category that represents the sound emanating from the blade 42.

In a case in which the detected pattern is a pattern corresponding to the sound of the blade 42 (step S4: YES), the analyzer 12 determines whether the detected pattern matches a normal pattern (step S5). In other words, the analyzer 12 determines whether the pattern is classified into a category representing that the state of the blade 42 as a detection target is normal. In a case in which the detected pattern matches a normal pattern (step S5: YES), the analyzer 12 determines that the state of the blade 42 as the detection target is not abnormal and terminates execution of the procedures in the flowchart in FIG. 10. In a case in which the detected pattern does not match a normal pattern (step S5: NO), the analyzer 12 determines that the state of the blade 42 as the detection target is abnormal and provides notification that the state of the blade 42 as the detection target is abnormal via the display apparatus 30 (step S6). After executing the procedure in step S6, the analyzer 12 terminates the execution of the procedures of the flowchart in FIG. 10.

In a case in which the detected pattern is not a pattern corresponding to the sound of the blade 42 (step S4: NO), the analyzer 12 classifies the detected pattern into a category of environmental sound and provides notification of the type of sound associated with the classified category via the display apparatus 30 (step S7). After executing the procedure in step S7, the analyzer 12 terminates the execution of the procedures of the flowchart in FIG. 10.

### <Summary>

As described above, in the state detection system 1 according to the present embodiment, the state detection apparatus 10 detects characteristic patterns from an image representing a time variation of frequency components of acoustic information generated based on sound produced at a detection target. The state detection apparatus 10 classifies the detected characteristic patterns into categories representing various states, and detects the states represented by the categories. In this way, various states are detected while being distinguished from each other. The detection accuracy of the various states improves as a result.

With use of the state detection system 1, the state of the detection target can be recognized even if the entity (such as a worker) managing the wind turbine 40 equipped with the blades 42, which are the detection target, is not on site. The frequency and cost of visits by workers and the like to the site of the detection target are reduced as a result. In addition, constant monitoring is achieved. The safety of the detection target is improved by the constant monitoring.

The state detection system 1 makes the criteria for determining the state clear. In addition, the results of the analysis of the acoustic information are made clear as numerical values. Consequently, the safety of the detection target is improved.

The state detection system 1 can store the acoustic information. The skills and knowledge of the workers and the like can be enhanced by checking the stored acoustic information together with the results of the detection of the state of the detection target by the state detection system 1.

### (Other Embodiments)

Other embodiments are described below.

### <State Detection Based on Instantaneous Frequency Components>

The analyzer 12 may, as described above, detect the state of the detection target based on an image representing the time variation of the frequency components of the acoustic information. The analyzer 12 may detect the state of the detection target based on a frequency spectrum representing the instantaneous frequency components of the acoustic information at a certain time. The analyzer 12 may, for example, determine that the state of the detection target is a specific state in a case in which the sound pressure of a specific frequency component in the frequency spectrum exceeds a threshold.

### <Other Examples of Detection Targets>

The state detection system 1 is not limited to taking the above-described blades 42 of the wind turbine 40 as the detection target and may detect the state of various other apparatuses or equipment. The state detection system 1 may, for example, detect the state of an apparatus or equipment that generates sound as the detection target. The state detection system 1 may, for example, detect the state of a fan, blower, or the like that generates sound in a periodic pattern as the detection target. The state detection system 1 may, for example, detect the state of a compressor or the like that generates sound in a discrete or abrupt pattern as the detection target.

Although embodiments of the present disclosure have been described through drawings and examples, it is to be noted that various changes and modifications may be made by those skilled in the art on the basis of the present disclosure. Therefore, such changes and modifications are to be understood as included within the scope of the present disclosure. For example, the functions and the like included in the various components may be reordered in any logically consistent way. Furthermore, components may be combined into one or divided.

### REFERENCE SIGNS LIST

1 State detection system
10 Abnormality detection apparatus (12: Analyzer, 14: Memory, 16: Interface)
20 Sound collection apparatus
30 Display apparatus
40 Detection target (42: Blade, 44: Nacelle, 46: Support, 48: Abnormal site)
51 to 53, 55, 56 Pattern
54, 57, 58 Characteristic pattern

## Claims

1. A state detection apparatus comprising:
an analyzer configured to detect a state of a detection target, wherein
the analyzer is configured to
acquire, as acoustic information, a result of measuring sound generated at the detection target,
detect a state of the detection target based on a pattern included in an image representing a time variation of a frequency component of the acoustic information, and
output a result of detecting the state of the detection target.

2. The state detection apparatus according to claim 1, wherein the analyzer is configured to analyze a site of the detection target at which a sound represented by the pattern is generated.

3. The state detection apparatus according to claim 2, wherein the analyzer is configured to output that a state of the site at which the sound represented by the pattern is generated is abnormal in a case in which a numerical value representing a difference between the pattern and a normal pattern is equal to or greater than a difference threshold.

4. The state detection apparatus according to claim 3, wherein the analyzer is configured to
detect the state of the detection target based on a database that associates the pattern with the state of the detection target, and
generate the normal pattern based on acoustic information for which the state of the detection target is normal and register the normal pattern in the database.

5. A state detection system comprising:
the state detection apparatus according to any one of claims 1 to 4; and
a sound collection apparatus configured to measure sound generated at a detection target and output a result of measurement to the state detection apparatus as acoustic information.

6. The state detection system according to claim 5, wherein the sound collection apparatus
comprises a plurality of microphones, and
is configured to generate acoustic information representing a component of sound arriving at the sound collection apparatus from a predetermined direction based on sound detected by each of the microphones.

7. The state detection system according to claim 6, wherein the analyzer of the state detection apparatus is configured to acquire a plurality of pieces of acoustic information representing a component of sound arriving at the sound collection apparatus from each direction in a plurality of directions and detect the state of the detection target based on the plurality of pieces of acoustic information.
